# EUROPEAN PATENT APPLICATION

(11) **EP 2 634 943 A1**
(43) Date of publication of application: **04.09.2013**
(21) Application number: 12157950.2
(22) Date of filing: 02.03.2012
(51) Int. Cl.: H04J 14/02, H04B 10/25

(54) **Optical transmitter for passive optical network**

(71) Applicant: Alcatel-Lucent Italia S.p.A., 20124 Milano (IT); Politecnico di Milano, 20133 Milano (IT)
(72) Inventor: Martinelli, Mario, 20097 San Donato Milanese (IT); Marazzi, Lucia, 27010 Borgarello (PV) (IT); Parolari, Paola, 20052 Monza (MB) (IT); Gavioli, Giancarlo, 20043 Arcore (MB) (IT)
(74) Representative: Mildner, Volker

(57) **Abstract**

An optical signal is generated by an SOA and then modulated by an optical amplitude modulation device. The signal is transmitted into a first end of an optical transmission line with a first polarization state. A fraction of the optical signal is re-transmitted into the other end of the transmission line, such that when it has at the other end a polarization state orthogonal to the polarization state of the signal fraction present at the other end. The re-transmitted signal, when having at the first end a polarization state orthogonal to the first polarization state, is guided from the first end to the SOA, next to the modulation device and then to the first end without passing the SOA again, using a polarizing beam splitter and a polarization device. The SOA is operated in a gain saturation state, such that an amplitude modulation of the re-transmitted optical signal is cancelled.

## Description

### Field of the invention

The invention relates to the field of passive optical networks. The present invention relates to an optical transmission system for a passive optical network, in particular (but not exclusively) for a WDM (Wavelength Division Multiplexing) passive optical network, and to an optical transmission unit for a WDM passive optical network WDM.

### Background

As it is known, a passive optical network (PON) is a type of an optical access network, i.e. a network allowing a plurality of users to be connected to a node of a core network (for instance, a metropolitan area network).

A PON typically comprises an optical line termination (OLT) and an optical distribution network (ODN). The ODN in turn comprises a plurality of optical links (typically comprising silica-based single-mode optical fibers) and passive optical components arranged so as to form a point-multipoint structure whose root is connected to the OLT. The OLT is typically located at a central office (CO) of the service provider. Each optical link of the OLT may be terminated at its far end by a respective optical network unit (ONU). Depending on the applications, an ONU may be located within the user's home (FTTH - Fiber To The Home), at the basement of a building (FTTB - Fiber To The Building) or at the curb in the proximity of one or more buildings (FTTC - Fiber To The Curb).

In a WDM PON, each ONU may communicate with the OLT by using a respective couple of wavelengths, comprising an upstream wavelength, which the ONU uses for transmission to the OLT, and a downstream wavelength, which the OLT uses for transmission to the ONU. The upstream wavelengths may be for instance located in the so-called C band, preferably in the range of 1530 nm to 1565 nm, whereas the downstream wavelengths may be for instance located in the so-called L band, preferably in the range of > 1565 nm.

In a WDM PON, the ODN typically comprises a so-called "remote node", a feeder optical fiber connecting the remote node to the OLT and a number of distribution optical fibers radiating from the remote node. Each distribution fiber may be terminated at its far end by an ONU or by a power splitter connecting the distribution fiber with multiple ONUs via multiple drop optical fibers.

The feeder fiber has a length typically ranging from about 5 km to about 40 km. The distribution fibers typically have a length ranging from some tens of meters to a few kilometers, depending on the environment - metropolitan or rural - and on the application. The remote node is typically a passive node, which means that it comprises only passive components such as Arrayed Waveguide Gratings (AWG.) or optical couplers, which do not need power supply.

In the downstream direction, the OLT generates downstream optical signals at the downstream wavelengths associated to the ONUs, multiplexes them according to the known WDM technique and transmits them to the remote node along the feeder fiber. At the remote node, the downstream signals may be demultiplexed and each of them may then be forwarded to a respective ONU along a respective distribution fiber.

In the upstream direction, each ONU generates a respective upstream signal at the upstream wavelength associated thereto and transmits it along the respective distribution fiber to the remote node. The remote node multiplexes all the upstream signals received from the various ONUs according to the known WDM technique, and forwards them to the OLT through the feeder fiber. At the OLT, the upstream signals are de-multiplexed and subjected to subsequent processing.

Thus, each ONU should comprise a transmitter capable of transmitting at the upstream wavelength assigned thereto. To minimize both manufacturing and inventory costs of the ONUs, it is known providing all the ONUs with a same type of transmitter which is "colorless", i.e. which in principle may transmit optical signals over a wide range of wavelengths, and that may be optically tuned to the proper upstream wavelength assigned to the ONU.

### Summary

Proposed is a method of transmitting data in a passive optical network. The method comprises different steps.

An optical signal is generated , using a semiconductor optical amplifier, and then optically guided to an optical modulation device, which carries out amplitude modulation on the generated optical signal.

The generated and amplitude modulated optical signal is transmitted into a first end of an optical transmission line with a polarization state that lies essentially within a first polarization plane.

At least a fraction of the transmitted optical signal is re-transmitted back into the other end of the optical transmission line, such that the re-transmitted signal fraction present at the other end has a polarization state that is essentially orthogonal to the polarization state of the fraction of the transmitted optical signal present at thesaid other end, using a faraday rotating mirror.

The re-transmitted signal is optically guided, when having at the first end a polarization state that is essentially orthogonal to the first polarization state, from the first end to the SOA, next to the optical modulation device and then further next to the said first end without passing the SOA again, using a polarizing beam splitter and at least one polarization modifying device.

The SOA is operated in a gain saturation state, such that an amplitude modulation of said re-transmitted optical signal is essentially cancelled.

For generating the optical signal, the SOA may be used. Then, the optical signal can be modulated in amplitude using the modulation device. When the re-transmitted optical signal fraction is received at the first end of the optical transmission line, the proposed way of optically guiding this re-transmitted optical signal fraction ensures,
- that the re-transmitted optical signal fraction reaches the SOA, which cancels out the previously caused amplitude modulation,
- that the re-transmitted optical signal fraction reaches the optical modulation device, which can use the re-transmitted optical signal for a new data transmission, by performing a new amplitude modulation,
- and that the re-transmitted optical signal fraction passes from the optical modulation device directly to the first end, which allows to use the SOA and the modulation device separately for the separate purposes of firstly cancelling out the previously caused amplitude modulation and secondly performing a new amplitude modulation, which in turn allows to achieve high modulation rates.

### Brief description of the Figures

Figure 1 shows a passive optical network.
Figure 2 shows different transmission bands for upstream and downstream signals.
Figure 3 shows an optical transmission system and an optical network unit according to a first embodiment.
Figure 4 shows a characteristic curve of an optical amplifier when being operated in saturation state.
Figure 5 shows an embodiment of an optical filter.
Figure 6 shows an optical transmission system and an optical network unit according to a further embodiment.
Figure 7 shows an optical transmission system and an optical network unit according to an even further embodiment.
Figure 8 shows bit error ratios achieved by different embodiments of an optical transmission system.

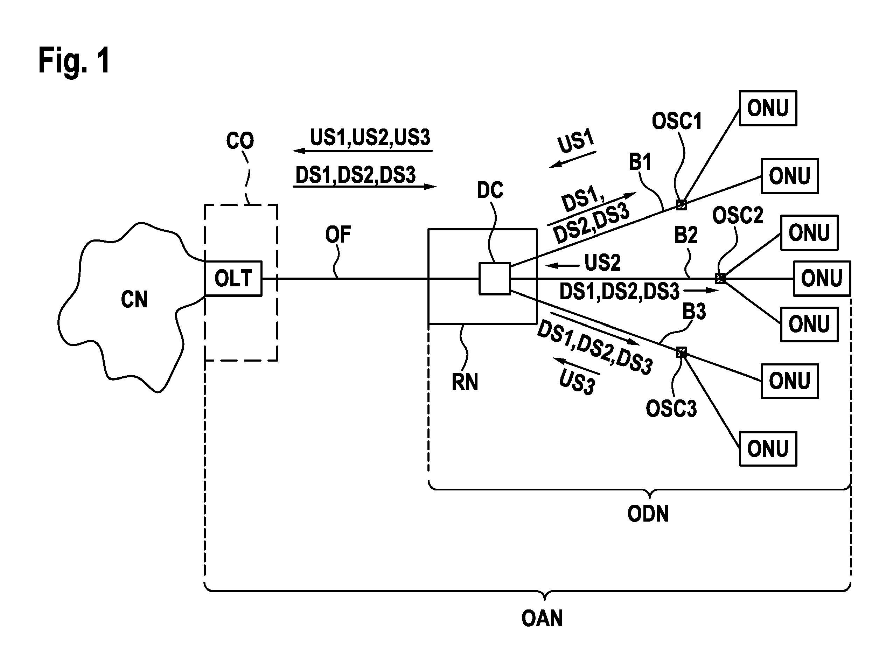

Figure 1 shows a passive optical network PON, which is connected at a central office CO via an optical line terminal (OLT) to a core network CN.

The OLT is connected via an optical feeder fibre OF to a remote note RN. Downstream signals DSI, DS2, DS3 are transmitted at respective downstream wavelengths to the remote note RN.

The branches B1, B2, B3 themselves may contain further splitting units OSC1, OSC2, OSC3 for furthermore splitting the downstream signals DS. At the end of the optical branches B1, B2, B3, customer sided access network termination units in the form of optical network units ONU are connected, which are alternatively optical network terminals (ONT). Distribution of the downstream signals DS1, DS2, DS3 is performed by the optical splitting unit OSC, by splitting the downstream signals DS1, DS2, DS3 onto the branches B1, B2, B3. The optical splitting units OSC1, ..., OSC3 may split the downstream signals by means of power splitting, such that each of the downstream signals DS1, DS2, DS3 is split onto each of the branches B1, B2, B3.

Each downstream signal DS1, DS2, DS3 of a specific wavelength carries one or more data signals that are assigned to one or more ONUs. Therefore, each ONU is assigned a specific downstream wavelength. The remote note RN receives the downstream signals DS1, DS2, DS3 and distributes them onto the optical branches B1, B2, B3 that are connected to the remote note RN.

According to a first solution, shown in the Figure 1, the remote nodes contains as an optical splitting unit OSC a power splitter, which splits the power of all downstream signals DS1, DS2, DS3 with all wavelengths onto all branches B1, B2, B3 that are connected to the remote note RN. According to this first solution, all ONUs receive all downstream signals at all downstream wavelengths.

According to a second solution, not shown explicitly in Figure 1, the remote node contains as an optical splitting unit OSC an optical filter in the form of an optical wavelength multiplexer/demultiplexer, which splits the downstream signals DS1, DS2, DS3 such that a specific downstream signal with a specific wavelength that carries data signals assigned to one or more specific ONUs is provided only onto the specific branch of these specific ONUs. The optical wavelength multiplexer/demultiplexer is preferably an AWG. According to this second solution, an ONU receives a downstream signal only at that downstream wavelength which is assigned to this ONU.

The ONUs transmit upstream signals US1, US2, US3 at respective upstream wavelengths that are assigned to the ONUs. These upstream signals US1, US2, US3 are combined by the optical splitting units OSC, OSC1, OSC2, OSC3 and then transmitted over the optical feeder fibre OF to the line terminal OLT.

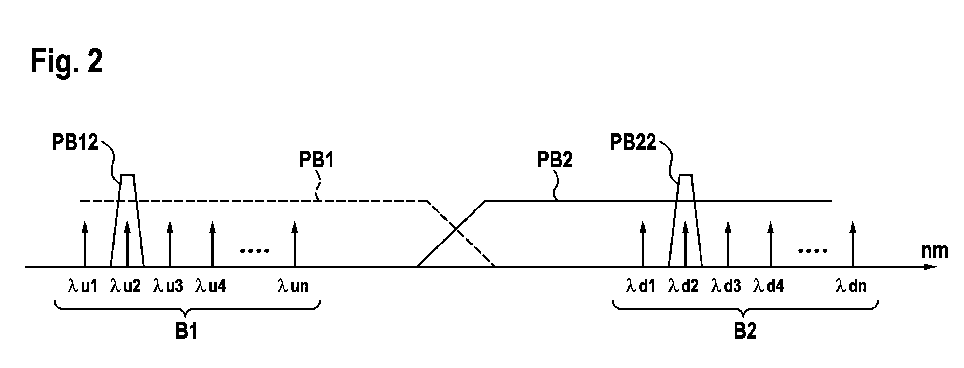

Figure 2 shows an example of upstream wavelengths λu1, λu2, ... λun that are comprised in a first waveband PB1, whereas the downstream wavelengths λd1, λd2, .... λdn are comprised in a second waveband PB2. The first waveband PB1 and the second waveband PB2 do not overlap. Preferably, the first waveband PB1 is the C band, whereas the second waveband is the L band. Adjacent downstream wavelengths λd1, λd2, .... λdn and adjacent upstream wavelengths λu1, λu2, .... λun are preferably spaced by a same channel spacing (for instance, about 0.8 nm).

Coming back to Figure 1, for transmitting upstream signals US1, US2, US3 at respective upstream wavelengths from the ONUs to the OLT, the ONUs need to generate their respective upstream signals US1, US2, US3 at the respective upstream wavelengths assigned to the ONUs.

### Description of Embodiments

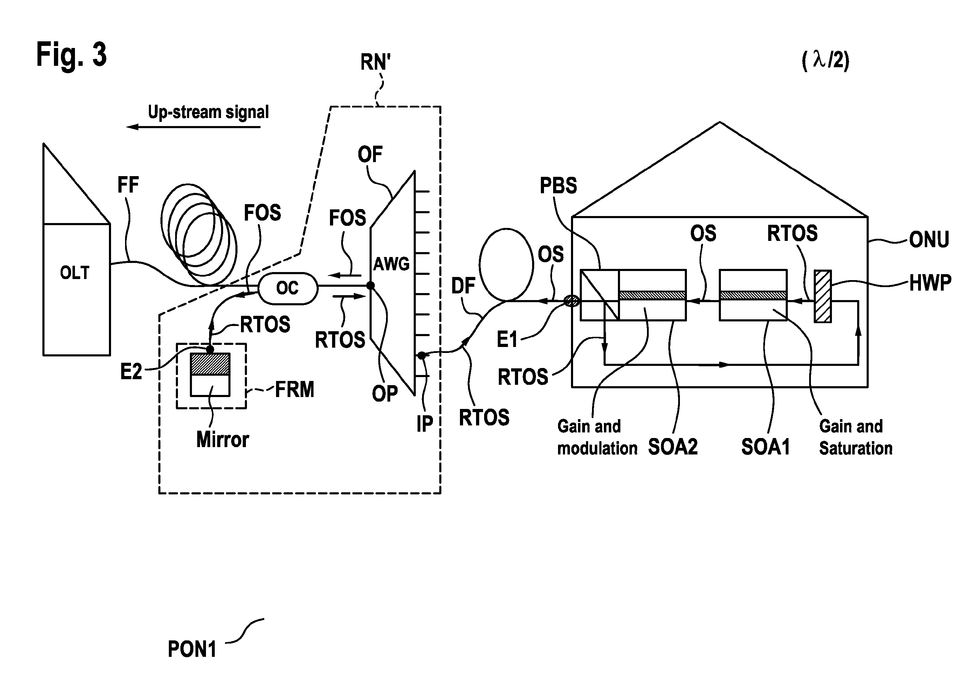

Figure 3 shows a passive optical network PONI, in which an optical network unit ONU is connected via a distribution fiber DF to remote node RN. Furthermore, the remote node RN is connected via a feeder fiber FF to an optical line terminal OLT.

The optical network unit ONU contains a semi-conductor optical amplifier SOA1, which generates an optical signal. This optical signal is optically guided, such that it is provided to an optical modulations device, which is preferably a second semi-conductor optical amplifier SOA2. Alternatively, the optical modulations device is a Mach-Zehnder modulator or an Electro-Absorbtion modulator. In the case, that the optical modulations device is a second semi-conductor optical amplifier SOA2, these optical amplifiers SOA1 and SOA2 may be provided as separate amplifiers, or alternatively as one amplifying device, which has two separate regions, that carry out the functions of the amplifiers SOA1 and SOA2 separately, as is it now described further on.

While the amplifier SOA1 generates an optical signal OS, the modulation device SOA2 modulates the amplitude of the generated optical signal OS. Preferably, the modulation device SOA2 has a polarization dependent gain, which has a maximized gain for a preferred polarization of the optical signal OS. The modulation device SOA2 may be a second semi-conductor optical amplifier with a polarization dependent gain, a Mach-Zehnder modulator with a polarization dependent gain or an Electro-Absorbtion modulator with a polarization dependent gain.

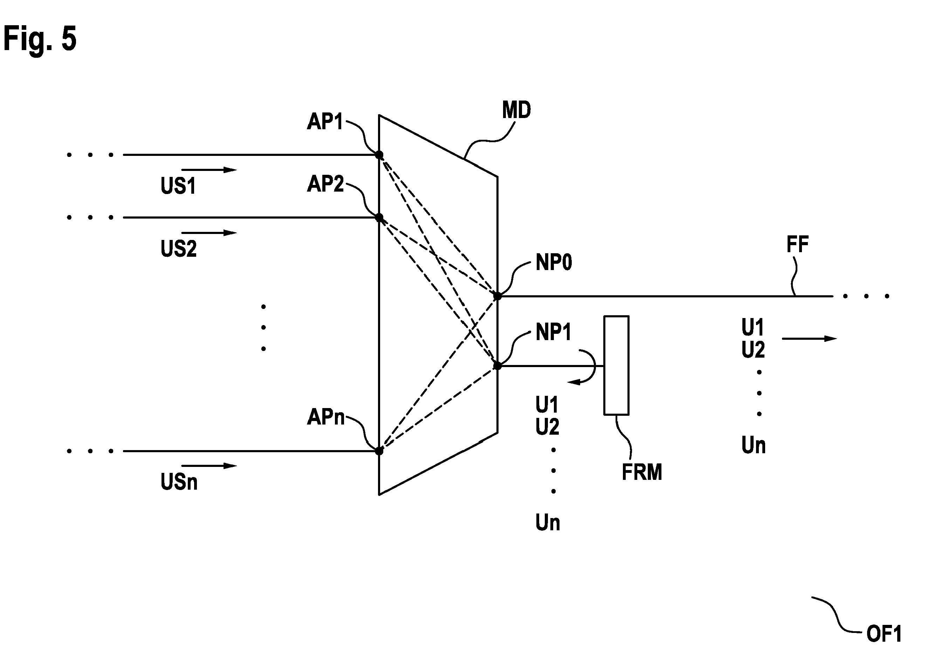

After amplitude modulation of the optical signal OS by the modulation device SOA2, the signal OS is provided to a polarizing beam splitter PBS, which is arranged, such that optical signals lying within the polarization plane preferred by the polarization dependent gain function of the modulation device SOA2 pass the polarization beam splitter PBS from the side, on which it is connected to the modulation device SOA2, towards that side, on which the polarizing beam splitter PBS is connected to the distribution fiber DF. The distribution fiber DF is connected to an input port IP of an optical filter OF. The optical signal OS is limited by the optical filter OF to a wavelength corresponding to the optical filter OF. Preferably, the optical filter OF is an arrayed waveguide grating AWG, as it will be described in detail with reference to the Figure 5 later on.

A signal fraction FOS of the signal OS passes from the output port OP of the filter OF at least partially to a faraday rotating mirror FRM. The other signal fraction is transmitted via the fiber FF towards the optical line terminal OLT. In the example, shown in Figure 3, the faraday rotating mirror FRM is coupled to the optical filter OF, by means of an optical coupler OC, which couples out a fraction FOS of the optical signal OS and provides this fraction FOS of the optical signal OS to the faraday rotating mirror FRM.

To summarize the above, the generated and amplitude modulated signal OS is transmitted into a first end E1 of an optical transmission line, which is formed by the distribution fiber DF, the optical filter OF, and which ends at the faraday rotating mirror FRM. The other end E2 of the optical transmission line is located at the faraday rotating mirror FRM.

While the optical coupler OC couples out a fraction FOS of the optical signal OS, a further fraction, not explicitly shown in Figure 3, of the optical signal OS is transmitted towards the optical line terminal OLT via the feeder fiber FF for data transmission.

The optical signal OS transmitted into the first end E1 of the optical transmission line is transmitted, such that it has a polarization state that lies essentially within one polarization plane, which is defined by the polarizing beam splitter. At the faraday rotating mirror FRM, the fraction FOS of the optical signal OS is re-transmitted back into the second end E2 of the optical transmission line. Hereby, the faraday rotating mirror rotates the polarization state of the re-transmitted signal fraction RTOS, such that it has a polarization state, that is essentially orthogonal to the polarization state of the signal fraction FOS when reaching the faraday rotating mirror FRM.

The optical filter OF and the faraday rotating mirror FRM, which is optically coupled to the optical filter OF, are placed preferably within a remote node RN'.

The faraday rotating mirror FRM performs a rotation by 45° per pass for the optical signals, such that the faraday rotator FR of the mirror FRM performs in total a rotation by 90°, since the faraday rotator FR is passed twice by the optical signal FOS that is transmitted to a mirror.

The optical transmission line starting at the first end E1 and ending at the faraday rotating mirror FRM is a retracing optical fibre circuit due to the fact, that the faraday rotating mirror FRM causes a rotation of polarization of 90 degrees. In such a retracing optical fibre circuit, polarization variations, which are caused by the optical transmission line on the optical signal OS transmitted from the first end E1 to the second end E2 by birefringence changes occurring with the fibre DF, will be reciprocal to polarization variations caused on the re-transmitted signal RTOS, since the birefringence changes occurring within the fibre DF acting on the re-transmitted signal RTOS are reciprocal to the once acting on the optical signal OS. This is outlined in detail in the publication "Polarization noise suppression in retracing optical fiber circuits, N.C. Pistoni and M. Martinelli, OPTICS LETTERS, Vol. 16, No. 10, May15, 1991". Thus, the re-transmitted optical signal RTOS reaching the first end E1 has a polarization state that is orthogonal to the polarization state of the optical signal OS present at the first end E1.

The re-transmitted signal fraction RTOS passes from the faraday rotating mirror FRM to the optical coupler OC and through the optical filter OF further through the distribution fiber DF back towards the optical network unit ONU, where it reaches the polarizing beam splitter PBS. The polarizing beam splitter is arranged, such that it guides the re-transmitted signal fraction RTOS from the first end E1 of the transmission line to the amplifier SOA1 and then afterwards to the modulation device SOA2. The polarizing beam splitter PBS does so for the re-transmitted signal fraction RTOS, in the case that the re-transmitted signal fraction RTOS has a polarization state that lies essentially within a polarization plane that is orthogonal to the polarization plane of the optical signal OS.

Furthermore, using a half-wave plate HWP as a polarization modifying device, the re-transmitted signal fraction RTOS is guided to the amplifier SOA1 and then to the modulation device SOA2, such that the re-transmitted signal fraction RTOS reaches the modulation device SOA2 with a polarization state, that lies essentially within the polarization plane that is essentially equal to the preferred polarization plane of the polarization dependent gain function of the modulation device SOA2. For doing so, the polarization modifying device HWP performs a polarization rotation by 90°.

In the example given in Figure 3, the polarization plane, in which the modulation device SOA2 modulates the amplitude of the optical signal OS, is identical to the polarization plane of the optical signal OS when being transmitted into the first end E1 of the optical transmission line.

The modulation device SOA2 is preferably one, which has a polarization dependent gain that is maximised for a polarization plane equal to the one, with which the optical signal OS is transmitted into the first end E1.

The amplifier SOA1 is preferably a semiconductor optical amplifier that has a polarization dependent gain that is maximised for preferred polarization plane of the optical signal reaching the amplifier SOA1. In this example of Figure 3, the polarization dependent gain that is maximised for a polarization plane that is equal to the polarization plan, for which the polarization dependent gain of the modulation device SOA 2 is maximised.

The different devices contained within the optical network unit ONU' are connected by polarization maintaining waveguides, which could be optical fibers, free space connections or other waveguides.

The advantage of the proposed solution is, that the reflected and re-transmitted signal fraction RTOS is fed back in a feedback loop to the amplifier SOA1 and the modulation device SOA2, such that in total the faraday rotating mirror FRM and the optical network unit ONU form a cavity, which causes the amplifier SOA to emit a coherent optical signal at a wavelength that is defined by the optical filter OF as that wavelength, to which the optical filter limits the signals OS and RTOS.

A further advantage is, the proposed way of optically guiding the re-transmitted optical signal fraction ensures,
- that the re-transmitted optical signal fraction reaches the SOA, which cancels out the previously caused amplitude modulation,
- that the re-transmitted optical signal fraction reaches the optical modulation device, which can use the re-transmitted optical signal for a new data transmission, by performing a new amplitude modulation,
- and that the re-transmitted optical signal fraction passes from the optical modulation device directly to the first end, which allows to use the SOA and the modulation device separately for the separate purposes of firstly cancelling out the previously caused amplitude modulation and secondly performing a new amplitude modulation, which in turn allows to achieve high modulation rates.

Furthermore, it is of advantage, that the modulation device SOA2 is provided with the re-transmitted signal RTOS, such that this signal RTOS has a polarization state that is essentially equal to the preferred polarization plane of the modulation device SOA2.

Furthermore, it is of advantage, that the amplifier SOA1 is provided with the re-transmitted signal RTOS, such that this signal RTOS has a polarization state that is essentially equal to the preferred polarization plane of the amplifier SOA1.

The optical amplifier SOA1 and the modulation device SOA2 of Figure 3 preferably have a spectral bandwidth coincident with the passband PB12 of Figure 2. This advantageously triggers a positive feedback mechanism in the cavity formed by the faraday rotating mirror and the optical network unit, that induces the cavity to emit a coherent optical radiation in the downstream direction from the optical network unit ONU to the optical line terminal OLT.

The final single emission wavelength of the coherent optical signal that is transmitted into the fiber FF connecting the optical filter OF and the OLT is furthermore determined by the passband characteristics of the passband PB12.

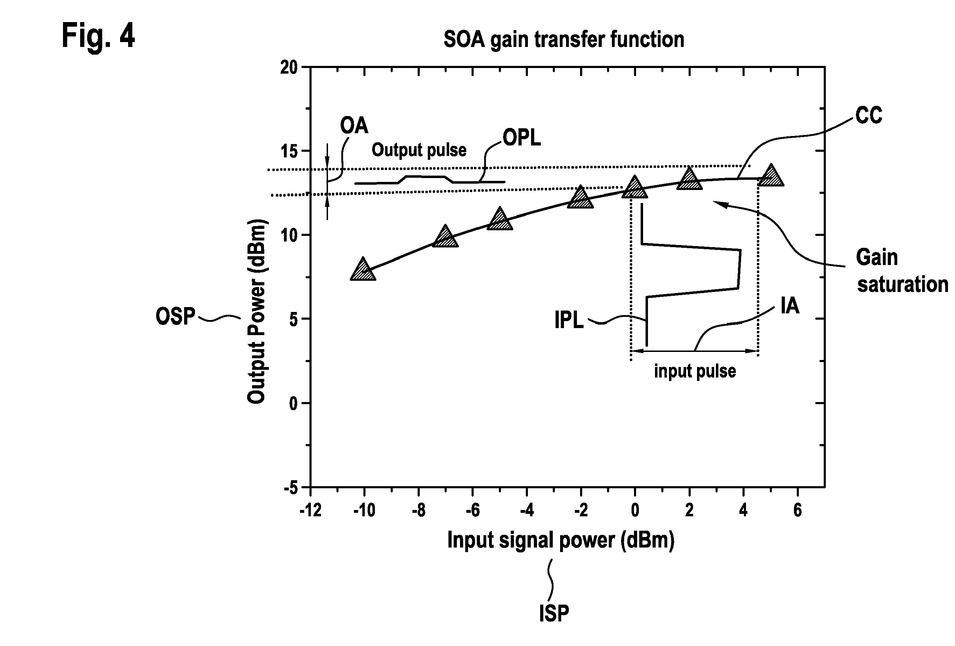

Figure 4 shows a characteristic curve CC describing the relationship between input signal power ISP and output signal power OSP for the amplifier SOA1 of Figure 3.

The amplifier is operated in a saturation state, such that an amplitude modulation present within the re-transmitted optical signal is essentially cancelled. Figure 4 shows an input modulation amplitude IA of an input pulse IPL as well as an output modulation amplitude OA of an output pulse OPL. It is evident, that by operating the amplifier in the saturation state, the input modulation amplitude IA is essentially removed, such that the output modulation amplitude OA is neglectable in comparison to the input modulation amplitude.

By using the amplifier SOA1 of Figure 3, for cancelling out a remaining amplitude, that may be present within the re-transmitted signal fraction RTOS, the modulation device SOA2 may be separately used and controlled, for modulating an amplitude, which allows the advantage of achieving a high modulation rate, preferably of up to 10 Gigabit per second.

To reconsider Figure 3, it has to be noted, that the amplifier SOA1 and the modulation device SOA2 are arranged, such that the optical signal OS generated by the amplifier SOA1 is provided to the modulation device SOA2. Furthermore, the polarization beam splitter PBS is arranged, to transmit the generated and amplitude modulated optical signal into the first end E1 of the optical transmission line with a polarization state, that lies within essentially one single polarization plane.

The polarization beam splitter PBS and the polarization modifying device HWP are arranged in conjunction, to optically guide the re-transmitted signal fraction RTOS, when this fraction RTOS has a polarization state orthogonal to the polarizations state of the signal OS transmitted into the first end E1, such that the re-transmitted signal fraction RTOS reaches the modulation device SOA2 with a polarization state, that lies essentially within the polarization plane, for which the modulation device SOA2 has a maximized polarization dependent gain.

The polarization beam splitter PBS and the polarization modifying device HWP form a feedback loop, that provides the re-transmitted optical signal fraction RTOS from the first end E1 to the amplifier SOA1 and then afterwards to the modulation device SOA2, such that the polarization state of the re-transmitted optical signal fraction RTOS lies within the polarization plane, for which the modulation device SOA2 has a maximized polarization dependent gain.

Preferably, the feedback loop can be considered to comprise also the faraday rotating mirror FRM and the optical transmission line connecting the optical network unit ONU and the faraday rotating mirror FRM.

The optical transmission line comprises at least one optical fiber DF and an optical filter OF, that is arranged between the faraday rotating mirror FRM and the polarization beam splitter PBS. The optical filter OF is operable to limit the optical signal OS and the re-transmitted signal fraction RTOS to a wavelength defined by the optical filter OF.

Figure 5 shows an embodiment of the optical filter in the form of a wavelength dependent multiplexer/demultiplexer MD (briefly termed herein after mux/demux), to which the faraday rotating mirror FRM is coupled.

The mux/demux MD is preferably an AWG having a first network sided port NP0, a second network sided port NP1 and n optical network unit sided ports AP1, AP2, ... APn. The AWG preferably is an athermal AWG. In this example, the number of amplifier sided ports is n=10. Thus, up to n=10 different optical network units may be connected to the mux/demux MD. At the n amplifier sided ports AP1, AP2, ... APn, respective upstream signals US1, ..., USn may be received from respective optical network units.

Figure 2 shows passband transfer function characteristic PB12 of the respective port AP2 of Figure 4. The mux/demux MD is preferably a cyclic AWG, such that each amplifier sided port AP2 has not only one passband transfer function PB12 within the passband PB1, but at least one further passband transfer function PB22, which are separated by the free spectral range FSR of the cyclic AWG.

Coming back to Figure 5, the first network sided port NP0 is preferably the port at which an mth diffraction order (m being equal to 0, 1, 2, etc.) of optical upstream signals US1, ..., USn, which enter the mux/demux MD through the optical network unit sided ports AP1, ..., APn and have wavelengths equal to the respective upstream wavelengths, focuses. An upstream signal US1, ..., USn is preferably the optical signal OS shown in Figure 3. Further, the second network sided port NP1 is preferably the port at which an (m+k)th or (m-k)th diffraction order (k being an integer equal to or higher than 1, preferably equal to 1) of optical signals, which enter the mux/demux MD through the user network sided ports AP1, ..., APn and have wavelengths equal to the respective downstream wavelengths, focuses. The first network sided port NP0 is preferably connected to a waveguide FF, preferably a feeder fiber, while the second network sided port NP1 is preferably connected to the faraday rotating mirror FRM.

By looking at Figure 3 in conjunction with Figure 2 and Figure 5, it becomes evident, that the resonant frequency at which the optical amplifier SOA1 generates the optical signal is defined by the choice of the port, to which the optical network unit is connected.

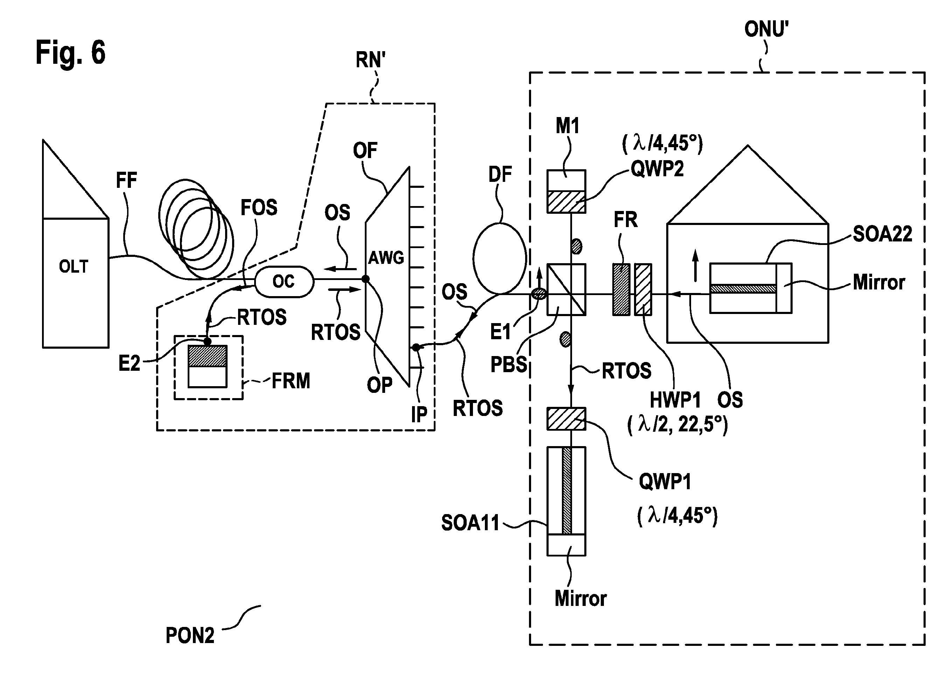

Figure 6 shows a passive optical network PON2, which contains essentially all elements as previously described with regard to Figure 3, except for a modified optical network unit ONU'.

Within the optical network unit ONU', the polarization beam splitter PBS is arranged, such that the re-transmitted optical signal fraction RTOS lying within a specific polarization plane is reflected towards a quarter wave plate QWP1. The optical signal fraction RTOS passes the quarter wave plate QWP1 and then reaches a semi-conductor optical amplifier SOA11, which is a reflective semi-conductor optical amplifier. The re-transmitted optical signal OS is reflected by the mirror of the amplifier SOA11 and then passes the quarter wave plate QWP1 once more. At each pass, the quarter wave plate QWP1 rotates the polarization state of the signal fraction RTOS by 45°, such that the quarter wave plate QWP1 causes in total a rotation of the polarization state by 90°.

Next, the signal fraction RTOS passes the polarization beam splitter PBS and is then provided to a combination of a further quarter wave plate QWP2 and a mirror M1. The signal fraction RTOS passes the quarter wave plate QWP2, is reflected by the mirror M1 and passes the quarter wave plate QWP2 once more. The quarter wave plate QWP2 causes a rotation of the signal fraction RTOS by 45° per pass, such that it causes in total a rotation of the polarization state by 90°.

Next, the polarization beam splitter PBS optically guides the re-transmitted signal fraction RTOS towards a combination of faraday rotator FR, a half wave plate HWP1, and an optical modulation device SOA22.When passing the faraday rotator FR from the polarization beam splitter PBS towards the half wave plate HWP1, the faraday rotator FR causes a rotation of the polarization state on the signal fraction RTOS of positive 45°. Furthermore, the half wave plate HWP1 causes a rotation per pass by 45° of the polarization state.

Next, the re-transmitted signal fraction RTOS is provided to the modulation device SOA22.

The modulation device SOA22 is preferably a reflective semiconductor optical amplifier. Preferably, this reflective semiconductor optical amplifier has a polarization dependent gain function which has a maximum for that polarization state, in which the re-transmitted signal fraction RTOS reaches the amplifier SOA22. While the optical amplifier SOA11 is operated in a saturation state for cancelling out a residual amplitude of the re-transmitted signal fraction RTOS, the modulation device SOA22 is operated, for causing a new amplitude modulation on the optical signal leaving the modulation device SOA22.

The optical signal passing from the modulation device SOA22 towards the polarization beam splitter PBS passes through the half wave plate HWP1, which causes a rotation of the polarization state by 90°, as well as the faraday rotator FR, which causes a rotation of the polarization state by negative 45°.

The chosen configuration of the different polarization modifying devices QWP1, QWP2, HWP1, FR in conjunction with the polarization beam splitter PBS ensure, that the optical signal reaching the polarization beam splitter PBS from the faraday rotator FR reaches the polarization beam splitter in a polarization state, which is essentially equal to that polarization plane for which the polarization beam splitter PBS will let this signal pass towards the first end E1 of the optical transmission line.

The different devices contained within the optical network unit ONU" are connected by polarization maintaining waveguides, which could be optical fibers, free space connections or other waveguides.

It is an advantage of the embodiment shown in Figure 6, that the reflected and re-transmitted signal fraction RTOS is fed back in a feedback loop to the amplifier SOA11 and the modulation device SOA22, such that in total the faraday rotating mirror FRM and the optical network unit ONU form a cavity, which causes the amplifier SOA11 to emit a coherent optical signal at a wavelength that is defined by the optical filter OF as that wavelength, to which the optical filter limits the signals OS and RTOS.

A further advantage is, that the proposed way of optically guiding the re-transmitted optical signal fraction ensures,
- that the re-transmitted optical signal fraction reaches the amplifier SOA11, which cancels out the previously caused amplitude modulation,
- that the re-transmitted optical signal fraction reaches the optical modulation device SOA22, which can use the re-transmitted optical signal for a new data transmission, by performing a new amplitude modulation,
- and that the re-transmitted optical signal fraction passes from the optical modulation device SOA22 directly to the first end E1, which allows to use the amplifier SOA11 and the modulation device SOA22 separately for the separate purposes of firstly cancelling out the previously caused amplitude modulation and secondly performing a new amplitude modulation, which in turn allows to achieve high modulation rates.

Furthermore, it is of advantage, that the modulation device SOA22 is provided with the re-transmitted signal RTOS, such that this signal RTOS has a polarization state that is essentially equal to the preferred polarization plane of the modulation device SOA22.

Furthermore, it is of advantage, that the amplifier SOA11 is provided with the re-transmitted signal RTOS, such that this signal RTOS has a polarization state that is essentially equal to the preferred polarization plane of the amplifier SOA11.

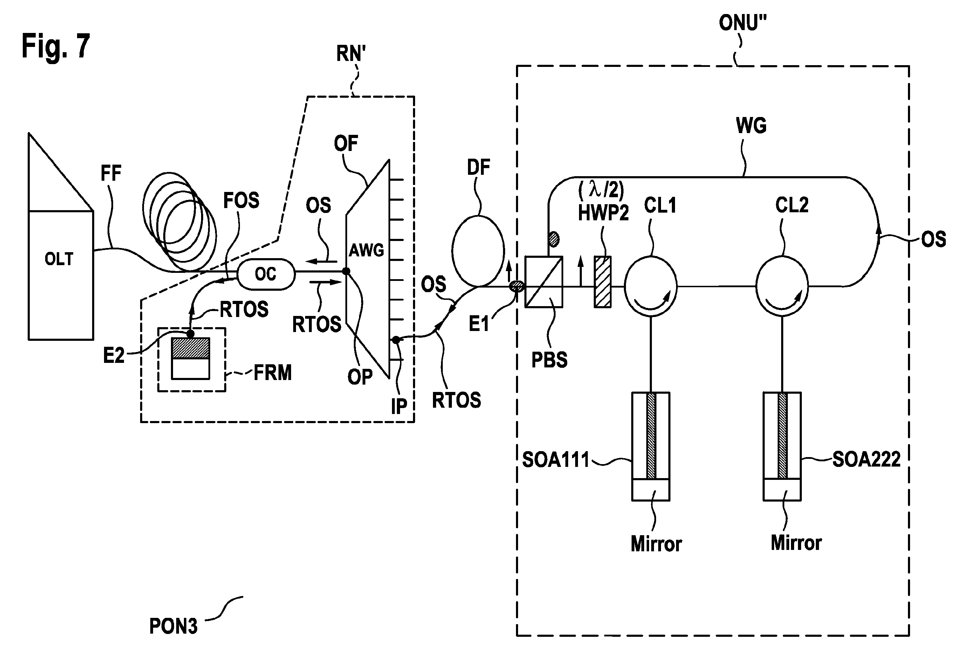

Figure 7 shows a passive optical network PON3, which contains essentially all elements as previously described with regard to the Figures 3 and 6, except for a modified optical network unit ONU".

An optical signal generated by a semi-conductor optical amplifier SOA111 is provided via an optical circulator CL1 and a further optical circulator CL2 to an optical modulation device SOA222.

The modulation device SOA222 is preferably a reflective semiconductor optical amplifier. Preferably, this reflective semiconductor optical amplifier has a polarization dependent gain function which has a maximum for that polarization state, in which the re-transmitted signal fraction RTOS reaches the amplifier SOA22.

While the optical amplifier SOA111 is operated in a saturation state for cancelling out a residual amplitude of the re-transmitted signal fraction RTOS, the modulation device SOA222 is operated, for causing a new amplitude modulation on the optical signal leaving the modulation device SOA222.

The amplifier SOA111 is preferably a reflective semi-conductor optical amplifier.

The amplifier SOA111 behaves in general as the amplifier SOA11 previously described with regard to Figure 6. Furthermore, the modulation device SOA222 behaves in general equal to the amplifier SOA22 previously described with regard to Figure 6.

Furthermore, the generated and amplitude modulated optical signal is provided, preferably via a polarization maintaining waveguide WG to the polarization beam splitter PBS.

In other words, the different devices contained within the optical network unit ONU"' are connected by polarization maintaining waveguides, which could be optical fibers, free space connections or other waveguides.

The polarization beam splitter PBS is arranged, such that it causes the transmission of the optical signal OS into the first end E1 of the optical transmission line.

Furthermore, the polarization beam splitter PBS causes a transmission of the reflected and re-transmitted optical signal fraction RTOS from the first end E1 towards the amplifier SOA11 and then towards the modulation device SOA222. The polarization beam splitter does so in conjunction with a half-wave plate HWP2, which is arranged between the polarization beam splitter PBS and the circulator CL1. Thus, the polarization beam splitter PBS and the half-wave plate HWP2 as a polarization modifying device causing a rotation of a polarization state by 90° optically guide the re-transmitted optical signal RTOS, when it has a polarization state that is orthogonal to the polarization state of the optical signal transmitted into the first end E1, from the first end E1 to the amplifier SOA111 and then next to the modulation device SOA222.

It is an advantage of the embodiment shown in Figure 7, that the reflected and re-transmitted signal fraction RTOS is fed back in a feedback loop to the amplifier SOA111 and the modulation device SOA222, such that in total the faraday rotating mirror FRM and the optical network unit ONU form a cavity, which causes the amplifier to emit a coherent optical signal at a wavelength that is defined by the optical filter OF as that wavelength, to which the optical filter limits the signals OS and RTOS.

A further advantage is, that the proposed way of optically guiding the re-transmitted optical signal fraction ensures,
- that the re-transmitted optical signal fraction reaches the amplifier SOA111, which cancels out the previously caused amplitude modulation,
- that the re-transmitted optical signal fraction reaches the optical modulation device SOA222, which can use the re-transmitted optical signal for a new data transmission, by performing a new amplitude modulation,
- and that the re-transmitted optical signal fraction passes from the optical modulation device SOA222 directly to the first end E1, which allows to use the amplifier SOA111 and the modulation device SOA222 separately for the separate purposes of firstly cancelling out the previously caused amplitude modulation and secondly performing a new amplitude modulation, which in turn allows to achieve high modulation rates.

Furthermore, it is of advantage, that the modulation device SOA222 is provided with the re-transmitted signal RTOS, such that this signal RTOS has a polarization state that is essentially equal to the preferred polarization plane of the modulation device SOA222.

Furthermore, it is of advantage, that the amplifier SOA111 is provided with the re-transmitted signal RTOS, such that this signal RTOS has a polarization state that is essentially equal to the preferred polarization plane of the amplifier SOA111.

The amplifiers described with regard to the Figures 3, 6 and 7 are preferably Fabry-Perot laser devices, that have an longitudinal mode separation that matches the prespectral range of the arrayed waveguide grating. The free spectral range of the arrayed waveguide gratings is defined as the frequency spacing between the passbands PB1 and PB2 shown in Figure 2. By choosing the mode spacing of the Fabry-Perot laser properly, only one Fabry-Perot laser mode can be allowed to match the reflection peak on the self-seeding cavity AWG.

As it has been described previously with regard to Figure 3, the optical filter OF shown in the Figures 6 and 7 may preferably be an arrayed waveguide grating AWG, to which the faraday rotating mirror FRM may be optically coupled either via an optical coupler OC or via the first order diffraction fraction port as described in detail with regard to Figure 5.

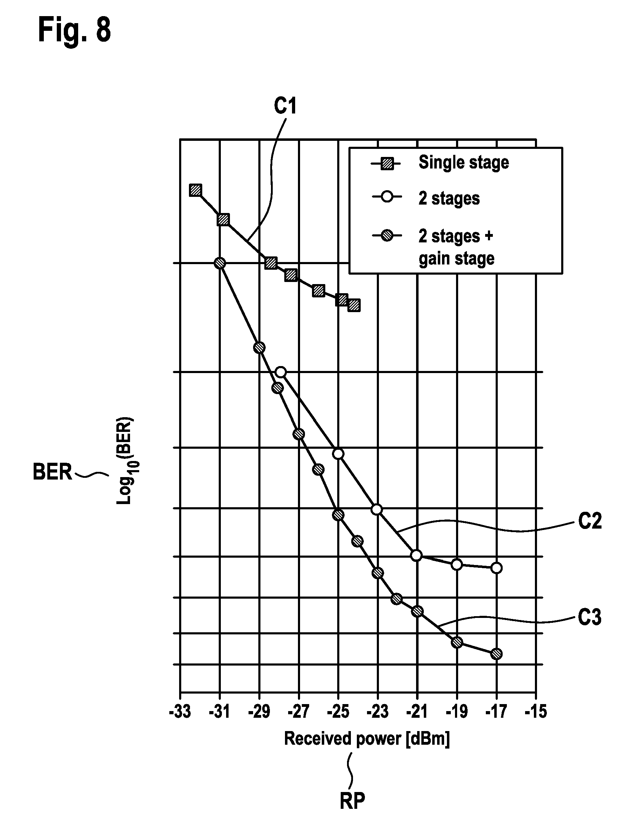

Figure 8 shows curves C1, C2, C3 of logarithmic bit error ratios BER plotted over the received power RP of an optical signal received at an optical line terminal OLT. The bit error ratios shown in Figure 8 were measured for a data transmission rate of 10 Gigabit per second.

The first curve C1 shows bit error ratios for a configuration, in which optical signals are not provided separately to separate devices for cancelling out a residual amplitude modulation and then re-modulating the amplitude, but to one device in which cancelling out a residual amplitude modulation and then re-modulating the amplitude is carried out in a same region.

The curve C2 shows logarithmic bit error ratios for the case, that separate amplifiers, SOA1 and SOA2, as shown in Figure 3, are used for separately cancelling out a residual amplitude modulation by one amplifier and then causing a new amplitude modulation by another amplifier.

The curve C3 shows logarithmic bit error ratios in the case, that in addition to two separate amplifiers for cancelling residual modulation and generating new amplitude modulation, a further semi-conductor optical amplifier is used for causing a gain on the optical signal.

As it can be clearly seen, by using two different semiconductor optical amplifiers separately for cancelling residual amplitude modulation and a new amplitude modulation, it is achieved a lower bit error ratio than when using only single optical amplifiers for both purposes. Furthermore, a further reduction of the bit error ratio can be achieved, when using an additional semiconductor optical amplifier as a gain stage.

Coming back to the Figures 3, 6 and 7 in conjunction, it has to be noted that the proposed solution is one, in which an optical network units ONU, ONU', ONU" cause a coherent optical signal OS, with a specific wavelength, in conjunction with the described remote node RN, due to the fact that two things are ensured: firstly, the fact that the optical signal and the re-transmitted optical signal RTOA are limited to the specific wavelength, and secondly, the fact that the re-transmitted signal RTOS has a polarization state at the beam splitter PBS - and the end E1 - that is orthogonal to the polarization state of the optical signal OS at the beam splitter PBS - and the end E1. Thus, in case that these two things are ensured by other means than the described remote node, the optical network units ONU, ONU', ONU" is also able to transmit the signal OS as a coherent optical signal with the specific wavelength. Therefore, the optical network units ONU, ONU', ONU" may be used in a network configuration different to the one described with regard to Figure 3.

The amplifiers SOA1, SOA11, SOA111 described with regard to the Figures 3, 6 and 7 may also cause an amplification of optical signals OS, RTOS passing these amplifiers SOA1, SOA11, SOA111. Furthermore, in the case that the modulation devices SOA2, SOA22, SOA222 are semiconductor optical amplifiers, these devices may also cause an amplification of optical signals OS, RTOS passing them.

An amplifier SOA1, SOA11, SOA111 described with regard to the Figures 3, 6 and 7 may be realized together with the respective modulation devices SOA2, SOA22, SOA222 as one monolithic semiconductor device.

## Claims

1. Method of transmitting data in a passive optical network (PON1, PON2, PON3), comprising
- generating an optical signal (OS), using a semiconductor optical amplifier (SOA), (SOA1, SOA11, SOA111),
- optically guiding said generated optical signal (OS) to an optical modulation device (SOA2, SOA22, SOA222),
- modulating an amplitude of the generated optical signal (OS), using said optical modulation device (SOA2, SOA22, SOA222),
- transmitting the generated and amplitude modulated optical signal (OS) into a first end (E1) of an optical transmission line with a polarization state that lies essentially within a first polarization plane,
- re-transmitting at least a fraction (FOS) of the transmitted optical signal (OS) back into the other end (E2) of said optical transmission line, such that the re-transmitted signal fraction (RTOS) present at said other end (E2) has a polarization state that is essentially orthogonal to the polarization state of said fraction (FOS) of said transmitted optical signal present at said other end (E2), using a faraday rotating mirror (FRM),
- optically guiding said re-transmitted signal (RTOS), when having at said first end (E1) a polarization state that is essentially orthogonal to said first polarization state, from said first end (E1) to said SOA (SOA1, SOA11, SOA111), next to said optical modulation device (SOA2, SOA22, SOA222) and then further next to said first end (E1) without passing said SOA again, using a polarizing beam splitter (PBS) and at least one polarization modifying device (HWP, HWP2, QWP1, QWP2, FR, HWP1),
- operating said SOA (SOA1, SOA11, SOA111) in a gain saturation state, such that an amplitude modulation of said re-transmitted optical signal (RTOS) is essentially cancelled.

2. Method according to claim 1,
wherein said optical modulation device (SOA2, SOA22, SOA222) has a gain that has a maximum corresponding to said first polarization plane,
and wherein said re-transmitted signal (RTOS) is optically guided, such that said re-transmitted optical signal reaches said optical modulation device (SOA2, SOA22, SOA222) with a polarization state that lies essentially within said first polarization plane.

3. Method according to claim 1,
wherein said SOA is a first SOA,
and wherein said optical modulation device is a second SOA.

4. Method according to claim 1,
wherein said optical modulation device is a Mach-Zehnder modulator or an Electro-Absorbtion modulator.

5. Method according to claim 1,
wherein the step of optically guiding said re-transmitted signal (RTOS) includes rotating a polarization state of said re-transmitted optical signal (RTOS) by 90 degrees.

6. Method according to claim 2,
wherein said SOA has a gain that has a maximum corresponding to a second polarization plane,
comprising furthermore
providing the re-transmitted optical signal (RTOS) present at said first end (E1) of said optical transmission line first to said SOA (SOA1, SOA11, SOA111) and afterwards to said optical modulation device (SOA2, SOA22, SOA222), such that the polarization state of said re-transmitted optical signal (RTOS) is equal to said second polarization plane at said SOA (SOA1, SOA11, SOA111) and such that the polarization state of said re-transmitted optical signal (RTOS) is equal to said first polarization plane at said optical modulation device (SOA2, SOA22, SOA222), using said polarizing beam splitter (PBS) and said at least one polarization modifying device (HWP, HWP2, QWP1, QWP2, FR, HWP1).

7. Method according to claim 6,
wherein the step of providing said re-transmitted optical signal (RTOS) is carried out, using a faraday rotating mirror (FRM) and said optical transmission line.

8. Method according to claim 1, comprising furthermore
limiting said transmitted optical signal (OS) and said re-transmitted signal (RTOS) to a corresponding wavelength, using an optical filter (OF).

9. Method according to claim 6,
wherein said optical filter (OF) is an Arrayed Waveguide Grating (AWG), comprising furthermore
- optically coupling said polarizing beam splitter (PBS) to an input port (IP) of said Arrayed Waveguide Grating (AWG) and
- optically coupling said faraday rotating mirror (FRM) to an output port (OP) of said Arrayed Waveguide Grating (AWG).

10. Optical transmission system for a passive optical network (PON1, PON2, PON3), comprising
- a semiconductor optical amplifier (SOA), (SOA1, SOA11, SOA111) operable to generate an optical signal (OS),
- an optical modulation device (SOA2, SOA22, SOA222), operable to modulate an amplitude of the generated optical signal (OS), wherein said SOA (SOA1, SOA11, SOA111) and said optical modulation device (SOA2, SOA22, SOA222) are arranged, such that said generated optical signal (OS) is provided to said optical modulation device (SOA2, SOA22, SOA222),
- a polarizing beam splitter (PBS), arranged to transmit the generated and amplitude modulated optical signal (OS) into a first end (E1) of an optical transmission line with a polarization state that lies essentially within a first polarization plane,
- a faraday rotating mirror (FRM), operable to re-transmit at least a fraction (RTOS) of the transmitted optical signal (OS) back into the other end (E2) of said optical transmission line, such that the re-transmitted signal fraction (RTOS) present at said other end (E2) has a polarization state that is essentially orthogonal to the polarization state of said fraction (FOS) of said transmitted optical signal present at said other end (E2),
wherein said polarizing beam splitter (PBS) and at least one polarization modifying device (HWP, HWP2, QWP1, QWP2, FR, HWP1) are arranged in conjunction to optically guide said re-transmitted signal (RTOS), when having at said first end (E1) a polarization state that is essentially orthogonal to said first polarization state, from said first end (E1) to said SOA (SOA1, SOA11, SOA111), next to said optical modulation device (SOA2, SOA22, SOA222) and then further next to said first end (E1) without passing said SOA again,
and wherein said SOA (SOA1, SOA11, SOA111) is operable in a gain saturation state, such that an amplitude modulation of said re-transmitted optical signal (RTOS) is essentially cancelled.

11. Optical transmission system according to claim 10,
wherein said optical modulation device (SOA2, SOA22, SOA222) has a gain that has a maximum corresponding to said first polarization plane,
and wherein said polarizing beam splitter (PBS) and said at least one polarization modifying device (HWP, HWP2, QWP1, QWP2, FR, HWP1) are furthermore arranged in conjunction to optically guide said re-transmitted signal (RTOS), such that said re-transmitted optical signal reaches said optical modulation device (SOA2, SOA22, SOA222) with a polarization state that lies essentially within said first polarization plane.

12. Optical transmission system according to claim 10,
wherein said SOA is a first SOA,
and wherein said optical modulation device is a second SOA.

13. Optical transmission system according to claim 10,
wherein said optical modulation device is a Mach-Zehnder modulator or an Electro-Absorbtion modulator.

14. Optical transmission system according to claim 10,
wherein said at least one polarization modifying device (HWP, HWP2, QWP1, QWP2, FR, HWP1) causes a rotation of a polarization state by 90 degrees.

15. Optical transmission system according to claim 11,
wherein said SOA has a polarization dependent gain that has a maximum corresponding to a second polarization plane,
wherein said polarizing beam splitter (PBS) and said polarization modifying device (HWP, HWP2, QWP1, QWP2, FR, HWP1) form a feed-back loop, that provides the re-transmitted optical signal (RTOS) present at said first end (E1) of said optical transmission line first to said SOA (SOA1, SOA11, SOA111) and afterwards to said optical modulation device (SOA2, SOA22, SOA222), such that the polarization state of said re-transmitted optical signal (RTOS) is equal to said second polarization plane at said SOA (SOA1, SOA11, SOA111) and such that the polarization state of said re-transmitted optical signal (RTOS) is equal to said first polarization plane at said optical modulation device (SOA2, SOA22, SOA222).

16. Optical transmission system according to claim 15,
wherein said feedback loop comprises said faraday rotating mirror (FRM) and said optical transmission line.

17. Optical transmission system according to claim 1,
wherein said optical transmission line comprises
- at least one optical fiber (DF), and
- an optical filter (OF), which is arranged between said faraday rotating mirror (FRM) and said polarizing beam splitter (PBS), and which is operable to limit said transmitted optical signal (OS) and said re-transmitted optical signal (RTOS) to a corresponding wavelength.

18. Optical transmission system, according to claim 17,
wherein said optical filter (OF) is an Arrayed Waveguide Grating (AWG), wherein said polarizing beam splitter (PBS) is optically coupled to an input port (IP) of said Arrayed Waveguide Grating (AWG) via said at least one optical fiber (DF), and wherein said faraday rotating mirror (FRM) is optically coupled to an output port (OP) of said Arrayed Waveguide Grating (AWG).

19. Optical Network Unit (ONU) for a passive optical network (PON1, PON2, PON3), comprising
- a semiconductor optical amplifier (SOA), (SOA1, SOA11, SOA111) operable to generate an optical signal (OS),
- an optical modulation device (SOA2, SOA22, SOA222), operable to modulate an amplitude of the generated optical signal (OS), wherein said SOA (SOA1, SOA11, SOA111) and said optical modulation device (SOA2, SOA22, SOA222) are arranged, such that said generated optical signal (OS) is provided to said an optical modulation device (SOA2, SOA22, SOA222),
- a polarizing beam splitter (PBS), arranged to transmit the generated and amplitude modulated optical signal (OS) into a first end (E1) of an optical transmission line with a polarization state that lies essentially within a first polarization plane,
wherein said polarizing beam splitter (PBS) and at least one polarization modifying device (HWP, HWP2, QWP1, QWP2, FR, HWP1) are arranged in conjunction to optically guide said re-transmitted signal (RTOS), when having at said first end (E1) a polarization state that is essentially orthogonal to said first polarization state, from said first end (E1) to said SOA (SOA1, SOA11, SOA111), next to said optical modulation device (SOA2, SOA22, SOA222) and then further next to said first end (E1) without passing said SOA again,
and wherein said SOA (SOA1, SOA11, SOA111) is operable in a gain saturation state, such that an amplitude modulation of said re-transmitted optical signal (RTOS) is essentially cancelled.

## Amended claims

### Amended claims in accordance with Rule 137(2) EPC.

**1.** Method of transmitting data in a passive optical network (PON1, PON2, PON3), comprising
- generating an optical signal (OS), using a semiconductor optical amplifier (SOA), (SOA1, SOA11, SOA111),
- optically guiding said generated optical signal (OS) to an optical modulation device (SOA2, SOA22, SOA222),
- modulating an amplitude of the generated optical signal (OS), using said optical modulation device (SOA2, SOA22, SOA222),
- transmitting the generated and amplitude modulated optical signal (OS) into a first end (E1) of an optical transmission line with a polarization state that lies essentially within a first polarization plane,
- re-transmitting at least a fraction (FOS) of the transmitted optical signal (OS) back into the other end (E2) of said optical transmission line, such that the re-transmitted signal fraction (RTOS) present at said other end (E2) has a polarization state that is essentially orthogonal to the polarization state of said fraction (FOS) of said transmitted optical signal present at said other end (E2), using a faraday rotating mirror (FRM),
**characterized by** optically guiding said re-transmitted signal (RTOS), when having at said first end (E1) a polarization state that lies essentially within a polarization plane that is orthogonal to said first polarization plane, from said first end (E1) to said SOA (SOA1, SOA11, SOA111), then next to said optical modulation device (SOA2, SOA22, SOA222) and then further next to said first end (E1) without passing said SOA again, using a polarizing beam splitter (PBS) and at least one polarization modifying device (HWP, HWP2, QWP1, QWP2, FR, HWP1),
and by operating said SOA (SOA1, SOA11, SOA111) in a gain saturation state, such that an amplitude modulation of said re-transmitted optical signal (RTOS) is essentially cancelled.

**2.** Method according to claim 1,
wherein said optical modulation device (SOA2, SOA22, SOA222) has a gain that has a maximum corresponding to said first polarization plane,
and wherein said re-transmitted signal (RTOS) is optically guided, such that said re-transmitted optical signal reaches said optical modulation device (SOA2, SOA22, SOA222) with a polarization state that lies essentially within said first polarization plane.

**3.** Method according to claim 1,
wherein said SOA is a first SOA,
and wherein said optical modulation device is a second SOA.

**4.** Method according to claim 1,
wherein said optical modulation device is a Mach-Zehnder modulator or an Electro-Absorbtion modulator.

**5.** Method according to claim 1,
wherein the step of optically guiding said re-transmitted signal (RTOS) includes rotating a polarization state of said re-transmitted optical signal (RTOS) by 90 degrees.

**6.** Method according to claim 2,
wherein said SOA has a gain that has a maximum corresponding to a second polarization plane,
comprising furthermore
providing the re-transmitted optical signal (RTOS) present at said first end (E1) of said optical transmission line first to said SOA (SOA1, SOA11, SOA111) and afterwards to said optical modulation device (SOA2, SOA22, SOA222), such that the polarization state of said re-transmitted optical signal (RTOS) is equal to said second polarization plane at said SOA (SOA1, SOA11, SOA111) and such that the polarization state of said re-transmitted optical signal (RTOS) is equal to said first polarization plane at said optical modulation device (SOA2, SOA22, SOA222), using said polarizing beam splitter (PBS) and said at least one polarization modifying device (HWP, HWP2, QWP1, QWP2, FR, HWP1).

**7.** Method according to claim 6,
wherein the step of providing said re-transmitted optical signal (RTOS) is carried out, using a faraday rotating mirror (FRM) and said optical transmission line.

**8.** Method according to claim 1, comprising furthermore
limiting said transmitted optical signal (OS) and said re-transmitted signal (RTOS) to a corresponding wavelength, using an optical filter (OF).

**9.** Method according to claim 6,
wherein said optical filter (OF) is an Arrayed Waveguide Grating,
comprising furthermore
- optically coupling said polarizing beam splitter (PBS) to an input port (IP) of said Arrayed Waveguide Grating and
- optically coupling said faraday rotating mirror (FRM) to an output port (OP) of said Arrayed Waveguide Grating.

**10.** Optical transmission system for a passive optical network (PON1, PON2, PON3), comprising
- a semiconductor optical amplifier (SOA), (SOA1, SOA11, SOA111) operable to generate an optical signal (OS),
- an optical modulation device (SOA2, SOA22, SOA222), operable to modulate an amplitude of the generated optical signal (OS), wherein said SOA (SOA1, SOA11, SOA111) and said optical modulation device (SOA2, SOA22, SOA222) are arranged, such that said generated optical signal (OS) is provided to said optical modulation device (SOA2, SOA22, SOA222),
- a polarizing beam splitter (PBS), arranged to transmit the generated and amplitude modulated optical signal (OS) into a first end (E1) of an optical transmission line with a polarization state that lies essentially within a first polarization plane,
- a faraday rotating mirror (FRM), operable to re-transmit at least a fraction (RTOS) of the transmitted optical signal (OS) back into the other end (E2) of said optical transmission line, such that the re-transmitted signal fraction (RTOS) present at said other end (E2) has a polarization state that is essentially orthogonal to the polarization state of said fraction (FOS) of said transmitted optical signal present at said other end (E2),
**characterized in that** said polarizing beam splitter (PBS) and at least one polarization modifying device (HWP, HWP2, QWP1, QWP2, FR, HWP1) are arranged in conjunction to optically guide said re-transmitted signal (RTOS), when having at said first end (E1) a polarization state that lies essentially within a polarization plane that is orthogonal to said first polarization plane, from said first end (E1) to said SOA (SOA1, SOA11, SOA111), then next to said optical modulation device (SOA2, SOA22, SOA222) and then further next to said first end (E1) without passing said SOA again,
and **in that** said SOA (SOA1, SOA11, SOA111) is operable in a gain saturation state, such that an amplitude modulation of said re-transmitted optical signal (RTOS) is essentially cancelled.

**11.** Optical transmission system according to claim 10,
wherein said optical modulation device (SOA2, SOA22, SOA222) has a gain that has a maximum corresponding to said first polarization plane,
and wherein said polarizing beam splitter (PBS) and said at least one polarization modifying device (HWP, HWP2, QWP1, QWP2, FR, HWP1) are furthermore arranged in conjunction to optically guide said re-transmitted signal (RTOS), such that said re-transmitted optical signal reaches said optical modulation device (SOA2, SOA22, SOA222) with a polarization state that lies essentially within said first polarization plane.

**12.** Optical transmission system according to claim 10,
wherein said SOA is a first SOA,
and wherein said optical modulation device is a second SOA.

**13.** Optical transmission system according to claim 10,
wherein said optical modulation device is a Mach-Zehnder modulator or an Electro-Absorbtion modulator.

**14.** Optical transmission system according to claim 10,
wherein said at least one polarization modifying device (HWP, HWP2, QWP1, QWP2, FR, HWP1) causes a rotation of a polarization state by 90 degrees.

**15.** Optical transmission system according to claim 11,
wherein said SOA has a polarization dependent gain that has a maximum corresponding to a second polarization plane,
wherein said polarizing beam splitter (PBS) and said polarization modifying device (HWP, HWP2, QWP1, QWP2, FR, HWP1) form a feed-back loop, that provides the re-transmitted optical signal (RTOS) present at said first end (E1) of said optical transmission line first to said SOA (SOA1, SOA11, SOA111) and afterwards to said optical modulation device (SOA2, SOA22, SOA222), such that the polarization state of said re-transmitted optical signal (RTOS) is equal to said second polarization plane at said SOA (SOA1, SOA11, SOA111) and such that the polarization state of said re-transmitted optical signal (RTOS) is equal to said first polarization plane at said optical modulation device (SOA2, SOA22, SOA222).

**16.** Optical transmission system according to claim 15,
wherein said feedback loop comprises said faraday rotating mirror (FRM) and said optical transmission line.

**17.** Optical transmission system according to claim 1,
wherein said optical transmission line comprises
- at least one optical fiber (DF), and
- an optical filter (OF), which is arranged between said faraday rotating mirror (FRM) and said polarizing beam splitter (PBS), and which is operable to limit said transmitted optical signal (OS) and said re-transmitted optical signal (RTOS) to a corresponding wavelength.

**18.** Optical transmission system, according to claim 17,
wherein said optical filter (OF) is an Arrayed Waveguide Grating,
wherein said polarizing beam splitter (PBS) is optically coupled to an input port (IP) of said Arrayed Waveguide Grating via said at least one optical fiber (DF),
and wherein said faraday rotating mirror (FRM) is optically coupled to an output port (OP) of said Arrayed Waveguide Grating.

**19.** Optical Network Unit (ONU) for a passive optical network (PON1, PON2, PON3), comprising
- a semiconductor optical amplifier (SOA), (SOA1, SOA11, SOA111) operable to generate an optical signal (OS),
- an optical modulation device (SOA2, SOA22, SOA222), operable to modulate an amplitude of the generated optical signal (OS), wherein said SOA (SOA1, SOA11, SOA111) and said optical modulation device (SOA2, SOA22, SOA222) are arranged, such that said generated optical signal (OS) is provided to said an optical modulation device (SOA2, SOA22, SOA222),
- a polarizing beam splitter (PBS), arranged to transmit the generated and amplitude modulated optical signal (OS) into a first end (E1) of an optical transmission line with a polarization state that lies essentially within a first polarization plane,
**characterized in that** said polarizing beam splitter (PBS) and at least one polarization modifying device (HWP, HWP2, QWP1, QWP2, FR, HWP1) are arranged in conjunction to optically guide a re-transmitted signal (RTOS), when having at said first end (E1) a polarization state that lies essentially within a polarization plane that is orthogonal to said first polarization plane, from said first end (E1) to said SOA (SOA1, SOA11, SOA111), next to said optical modulation device (SOA2, SOA22, SOA222) and then further next to said first end (E1) without passing said SOA again,
and **in that** said SOA (SOA1, SOA11, SOA111) is operable in a gain saturation state, such that an amplitude modulation of said re-transmitted optical signal (RTOS) is essentially cancelled.
